# EUROPEAN PATENT APPLICATION

(11) **EP 3 537 716 A1**
(43) Date of publication of application: **11.09.2019**
(21) Application number: 16920731.3
(22) Date of filing: 03.11.2016
(51) Int. Cl.: H04N 7/24

(54) **MULTIMEDIA SIGNAL ANOMALY PROCESSING METHOD AND DISPLAY DEVICE**

(71) Applicant: Shenzhen Royole Technologies Co., Ltd., Shenzhen, Guangdong 518052 (CN)
(72) Inventor: WANG, Ji, Shenzhen Guangdong 518052 (CN)
(74) Representative: Hamer, Christopher K.
(86) International application number: PCT/CN2016/104469
(87) International publication number: WO 2018/081987

(57) **Abstract**

A method for processing multimedia signal abnormity and a display apparatus are provided. The method includes the following. Whether a multimedia signal received through a multimedia signal input interface of the display apparatus is abnormal is determined (100). A preset image signal is output to a central processing unit (CPU) of the display apparatus when the received multimedia signal is abnormal, such that the preset image signal is output to a display screen of the display apparatus through the CPU, where the preset image signal contains a prompt message of a multimedia signal abnormity (102). Based on the above method, when the received multimedia signal is abnormal, the image signal containing the prompt message of the multimedia signal abnormity is output to the CPU, such that the CPU outputs the image signal to the display screen of the display apparatus, thus not only blurred screens or bright lines displayed on the display screen can be avoided, but also a user is reminded that the multimedia signal is abnormal.

## Description

### TECHNICAL FIELD

The present disclosure relates to the technical field of display, and particularly to a method for processing multimedia signal abnormity and a display apparatus.

### BACKGROUND

At present, many display apparatuses such as head-mounted display devices, televisions, computers, tablet computers and so on all have a multimedia signal input interface. The multimedia signal input interface may be a high definition multimedia interface (HDMI), a digital visual interface (DVI), or the like. The display apparatus is coupled with an external device (a head-mounted display device, a television, or the like) through the multimedia signal input interface, and receives and displays a multimedia signal transmitted by the external device. The multimedia signal may be a video signal, an audio-video signal, and so on. When the multimedia signal input interface and the external device is in bad contact, that is, the multimedia signal received from the external device by the display apparatus is not stable or the multimedia signal suddenly disappears, blurred screens or bright lines may be displayed on a display screen of the display apparatus.

### SUMMARY

In view of the above, an embodiment of the present disclosure provides a method for processing multimedia signal abnormity and a display apparatus, so as to avoid blurred screens or bright lines on a display screen of the display apparatus.

The method for processing multimedia signal abnormity provided by the embodiment of the present disclosure is applied to a display apparatus. The display apparatus includes a multiple signal input interface capable of being coupled with an external device and receiving a multimedia signal from the external device. The method for processing multimedia signal abnormity includes the following. Whether a multimedia signal received through the multimedia signal input interface is abnormal is determined. A preset image signal is output to a central processing unit (CPU) of the display apparatus based on a determination that the multimedia signal received through the multimedia signal input interface is abnormal, such that the preset image signal is output to a display screen of the display apparatus through the CPU, where the preset image signal contains a prompt message of a multimedia signal abnormity.

The display apparatus provided by the embodiment includes a multimedia signal input interface, a CPU, and a display screen. The display apparatus further includes a multimedia signal processor coupled between the multimedia signal input interface and the CPU, and is configured to determine whether a multimedia signal received through the multimedia signal input interface is abnormal, and to output a preset image signal to the CPU based on a determination that the multimedia signal received through the multimedia signal input interface is abnormal, such that the preset image signal is output to the display screen through the CPU, where the preset image signal contains a prompt message of a multimedia signal abnormity.

In the embodiment of the present disclosure, when an abnormity occurs during receiving a multimedia signal, the preset image signal containing the prompt message of the multimedia signal abnormity is output to the CPU, such that the preset image signal is output to the display screen through the CPU, thus not only blurred screens or bright lines displayed on the display screen can be avoided, but also a user is reminded that the multimedia signal is abnormal.

### BRIEF DESCRIPTION OF THE DRAWINGS

In order to illustrate technical solutions in embodiments of the present disclosure more clearly, the following briefly introduces the accompanying drawings required for describing the embodiments. Apparently, the accompanying drawings in the following description illustrate some but not exhaustive embodiments of the present disclosure. Those of ordinary skill in the art may also obtain other drawings based on these accompanying drawings without creative work.
FIG. 1 is a schematic flow chart illustrating a method for processing multimedia signal abnormity according to an embodiment of the present disclosure.
FIG. 2 is a schematic flow chart illustrating a method for processing multimedia signal abnormity according to another embodiment of the present disclosure.
FIG. 3 is a schematic structural diagram illustrating a display apparatus according to an embodiment of the present disclosure.

### DETAILED DESCRIPTION

Technical solutions of embodiments of the present disclosure will be described below clearly and completely in conjunction with the accompanying drawings of the embodiments of the present disclosure. Apparently, merely some but not all embodiments of the present disclosure are described. Based on the embodiments of the present disclosure, all the other embodiments, which a person ordinarily skilled in the art may obtain without paying creative work fall within the scope of protection of the present disclosure.

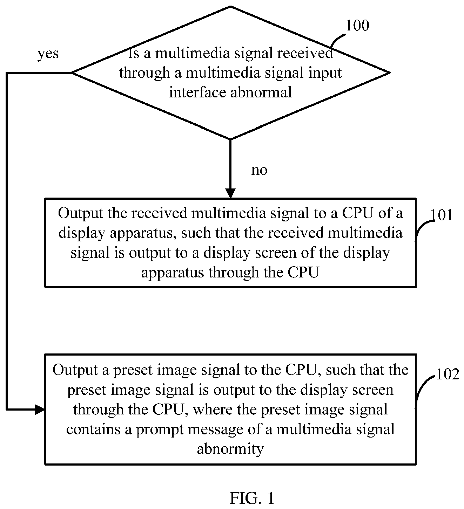

Referring to FIG. 1, FIG. 1 illustrates a flow chart of a method for processing multimedia signal abnormity according to an embodiment of the present disclosure. The method for processing multimedia signal abnormity is applied to a display apparatus. The display apparatus may have a function of image display or text display, and may be a head-mounted display apparatus, a tablet computer, a computer, a television, or the like. The display apparatus includes a multimedia signal input interface capable of being coupled with an external device. The multimedia signal input interface may be a high-definition multimedia interface (HDMI), a digital visual interface (DVI), or the like. The external device may be a head-mounted display apparatus, a tablet computer, a computer, or the like. The display apparatus can receive a multimedia signal from the external device through the multimedia signal input interface and display the multimedia signal. The multimedia signal may be a video signal, an audio-video signal, or the like. The method for processing multimedia signal abnormity includes the following.

Step 100, whether a multimedia signal received through the multimedia signal input interface is abnormal is determined. If no, step 101 is executed; if yes, step 102 is executed.

When the multimedia signal received through the multimedia signal input interface is an abnormal multimedia signal, or an interruption occurs in the multimedia signal received through the multimedia signal input interface (i.e., the multimedia signal suddenly disappears), it is determined that the multimedia signal received through the multimedia signal input interface is abnormal. During inserting a plug of a data line coupled with the external device into the multimedia signal input interface, due to an improper insertion operation, a variation amplitude of a voltage of the received multimedia signal may become abnormal, or a variation amplitude of a frequency of the received multimedia signal may become abnormal, or the multimedia signal may suddenly disappear. Certainly, during normal display of a multimedia signal on the display apparatus, if the plug of the data line is touched, the variation amplitude of the voltage of the multimedia signal received by the display apparatus may become abnormal, or the variation amplitude of the frequency of the multimedia signal received by the display apparatus may become abnormal, or the multimedia signal may suddenly disappear. If a multimedia signal transmitted by the external device is an abnormal multimedia signal, the multimedia signal received by the display apparatus is definitely an abnormal multimedia signal.

Alternatively, whether the received multimedia signal is an abnormal multimedia signal can be determined according to the voltage of the received multimedia signal. When the variation amplitude of the voltage of the received multimedia signal is not within a preset voltage variation amplitude range, the received multimedia signal is determined to be an abnormal multimedia signal. When the variation amplitude of the voltage of the received multimedia signal falls within the preset voltage variation amplitude range, the received multimedia signal is determined to be a normal multimedia signal. Take the HDMI as the multimedia signal input interface as an example, when the voltage of the received multimedia signal is 4% higher than 5V or 4% lower than 5V, the received multimedia signal is determined to be a normal multimedia signal. When the voltage of the received multimedia signal is 20% higher than 5V at a moment or 20% lower than 5V at a moment, the received multimedia signal is determined to be an abnormal multimedia signal.

Alternatively, whether the received multimedia signal is an abnormal multimedia signal can be determined according to the frequency of the received multimedia signal. When the variation amplitude of the frequency of the received multimedia signal is not within a preset frequency variation amplitude range, the received multimedia signal is determined to be an abnormal multimedia signal. When the variation amplitude of the frequency of the received multimedia signal falls within the preset frequency variation amplitude range, the received multimedia signal is determined to be a normal multimedia signal. That is to say, when the frequency of the received multimedia signal suddenly increases to be high, or suddenly decreases to be low, the received multimedia signal is determined to be an abnormal multimedia signal.

Step 101, the received multimedia signal is output to a central processing unit (CPU) of the display apparatus, such that the received multimedia signal is output to a display screen of the display apparatus through the CPU.

That is to say, when the received multimedia signal is a normal multimedia signal, the received multimedia signal is directly output to the CPU, such that the received multimedia signal is displayed on the display screen through the CPU.

Step 102, a preset image signal is output to the CPU, such that the preset image signal is output to the display screen through the CPU, where the preset image signal contains a prompt message of a multimedia signal abnormity.

That is to say, when the received multimedia signal is an abnormal multimedia signal, the received multimedia signal is not output to the CPU. Instead, the preset image signal is output to the CPU, such that the preset image signal is output to the display screen through the CPU, whereby a user is reminded that the multimedia signal is abnormal.

When the multimedia signal received through the multimedia signal input interface is an abnormal multimedia signal, the prompt message of the multimedia signal abnormity contains information that the variation amplitude of the voltage or the frequency of the received multimedia signal is abnormal. For example, a pure white image is displayed on the display screen, together with a prompt text containing information that the voltage or the frequency of the received multimedia signal is abnormal. When an interruption occurs in the multimedia signal received through the multimedia signal input interface, the prompt message of the multimedia signal abnormity contains information that the interruption occurs in the multimedia signal. For example, the pure white image is displayed on the display screen, together with a prompt text containing information that the interruption occurs in the multimedia signal. When types of multimedia signal abnormities are different, different prompt messages of the multimedia signal abnormities may be output, such that the user can quickly determine the types of the multimedia signal abnormities according to the prompt messages, and take a corresponding action to deal with the case. For example, when the prompt text is displayed and the prompt text contains information that the voltage or frequency of the received multimedia signal is abnormal, whether the external device can input a multimedia signal normally may be checked, and whether a coupling between the multimedia signal input interface and the plug of the data line is normal may also be checked. When the prompt text is displayed and contains information that the interruption occurs in the multimedia signal, whether the coupling between the multimedia signal input interface and the plug of the data line is normal may be first checked.

In the embodiment, when the received multimedia signal is abnormal, the preset image signal containing the prompt message of the multimedia signal abnormity is output to the CPU, such that the preset image signal is output to the display screen through the CPU, thus not only blurred screens or bright lines displayed on the display screen can be avoided, but also the user is reminded that the received multimedia signal is abnormal.

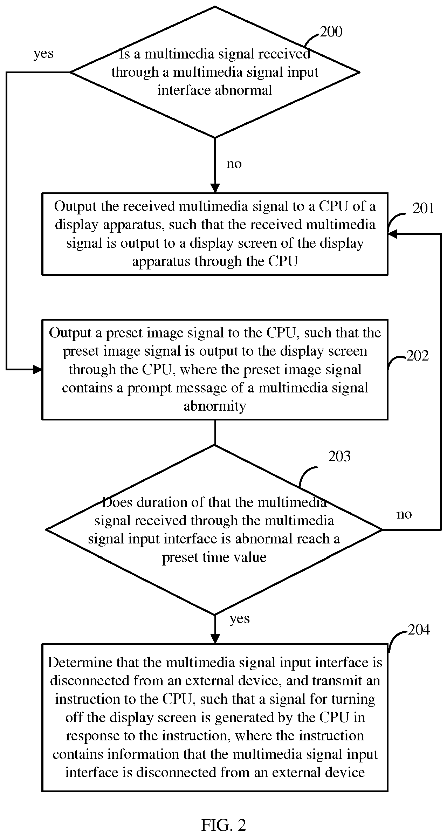

Referring to FIG. 2, FIG. 2 illustrates a flow chart of a method for processing multimedia signal abnormity according to another embodiment of the present disclosure.

Step 200, whether a multimedia signal received through a multimedia signal input interface of a display apparatus is abnormal is determined. If no, step 201 is executed. If yes, step 202 is executed. Step 200 is similar to step 100, and details are not repeated herein.

Step 201, the received multimedia signal is output to a CPU of the display apparatus, such that the received multimedia signal is output to a display screen of the display apparatus through the CPU.

Step 202, a preset image signal is output to the CPU, such that the preset image signal is output to the display screen through the CPU, where the preset image signal contains a prompt message of a multimedia signal abnormity. Step 202 is similar to step 102, and details are not repeated herein.

Step 203, after outputting the preset image signal to the CPU, whether duration of that the multimedia signal received through the multimedia signal input interface is abnormal reaches a preset time value is determined. If yes, step 204 is executed; otherwise, it indicates that the multimedia signal becomes normal, and step 201 is executed.

Step 204, the multimedia signal input interface is determined to be disconnected from the external device, and an instruction is transmitted to the CPU, such that a signal for turning off the display screen is generated by the CPU in response to the instruction. The instruction contains information that the display screen needs to be turned off as the multimedia signal input interface is disconnected from the external device.

After pulling the plug of the data line out, the display apparatus cannot receive a multimedia signal from the external device. When the display apparatus fails to receive a multimedia signal from the external device for some time, it is determined that the multimedia signal received through the multimedia signal input interface becomes abnormal for some time.

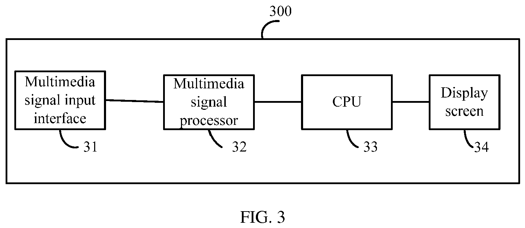

Referring to FIG. 3, FIG. 3 illustrates a schematic structural view of a display apparatus according to an embodiment of the present disclosure. A display apparatus 300 illustrated in FIG. 3 may have a function of image display or text display, and may be a head-mounted display apparatus, a tablet computer, a computer, a television, or the like. The display apparatus 300 includes a multimedia signal input interface 31, a multimedia signal processor 32, a CPU 33, and a display screen 34. The display apparatus 300 is coupled with an external device through the multimedia signal input interface 31, and receives a multimedia signal from the external device. The multimedia signal input interface 31 may be a high-definition multimedia interface (HDMI), a digital visual interface (DVI), or the like. The external device may be a head-mounted display apparatus, a tablet computer, a computer, or the like. The multimedia signal may be a video signal, an audio-video signal, or the like. The CPU 33 may be formed by one or more integrated circuits (ICs). For example, the processor 33 may be formed by a single encapsulated IC, and also may be formed by connection of multiple encapsulated ICs having the same function or different functions.

The multimedia signal processor 32 is coupled between the multimedia signal input interface 31 and the CPU 33, and configured to determine whether a multimedia signal received through the multimedia signal input interface 31 is abnormal, and to output the received multimedia signal to the CPU 33 when the multimedia signal received through the multimedia signal input interface 31 is normal, such that the received multimedia signal is output to the display screen 34 through the CPU 33. That is to say, when the received multimedia signal is a normal multimedia signal, the received multimedia signal is directly output to the CPU 33, such that the received multimedia signal is displayed on the display screen 34 through the CPU. The multimedia signal processor 32 is further configured to output a preset image signal to the CPU 33 when the multimedia signal received through the multimedia signal input interface 31 is abnormal, such that the preset image signal is output to the display screen 34 through the CPU, where the preset image signal contains a prompt message of a multimedia signal abnormity. That is to say, when the received multimedia signal is abnormal, the received multimedia signal is not output to the CPU 33. Instead, the preset image signal is output to the CPU 33, such that the preset image signal is output to the display screen 34 through the CPU 33, whereby a user is reminded that the multimedia signal is abnormal.

When a multimedia signal is received through the multimedia signal input interface 31 and the received multimedia signal is an abnormal multimedia signal, or an interruption occurs in the multimedia signal received through the multimedia signal input interface 31 (i.e., the multimedia signal suddenly disappears), the multimedia signal received through the multimedia signal input interface 31 is determined to be abnormal. During inserting a plug of a data line coupled with the external device into the multimedia signal input interface 31, due to an improper insertion operation, a variation amplitude of a voltage of the received multimedia signal may become abnormal, or a variation amplitude of a frequency of the received multimedia signal may become abnormal, or the multimedia signal may suddenly disappear. Certainly, during normal display of a multimedia signal on the display apparatus 300, if the plug of the data line is touched, the variation amplitude of the voltage of the multimedia signal received by the display apparatus may become abnormal, or the variation amplitude of the frequency of the multimedia signal received by the display apparatus may become abnormal, or the multimedia signal may suddenly disappear. If a multimedia signal transmitted by the external device is an abnormal multimedia signal, the multimedia signal received by the display apparatus 300 is definitely an abnormal multimedia signal.

Alternatively, whether the received multimedia signal is an abnormal multimedia signal can be determined according to the voltage of the received multimedia signal. When the variation amplitude of the voltage of the received multimedia signal is not within a preset voltage variation amplitude range, the received multimedia signal is determined to be an abnormal multimedia signal. When the variation amplitude of the voltage of the received multimedia signal falls within the preset voltage variation amplitude range, the received multimedia signal is determined to be a normal multimedia signal. Take the HDMI as the multimedia signal input interface as an example, when the voltage of the received multimedia signal is 4% higher than 5V or 4% lower than 5V, the received multimedia signal is determined to be a normal multimedia signal. When the voltage of the received multimedia signal is 20% higher than 5V at a moment or 20% lower than 5V at a moment, the received multimedia signal is determined to be an abnormal multimedia signal.

Alternatively, whether the received multimedia signal is an abnormal multimedia signal can be determined according to the frequency of the received multimedia signal. When the variation amplitude of the frequency of the received multimedia signal is not within a preset frequency variation amplitude range, the received multimedia signal is determined to be an abnormal multimedia signal. When the variation amplitude of the frequency of the received multimedia signal falls within the preset frequency variation amplitude range, the received multimedia signal is determined to be a normal multimedia signal. That is to say, when the frequency of the received multimedia signal suddenly increases to be high, or suddenly decreases to be low, the received multimedia signal is determined to be an abnormal multimedia signal.

When the multimedia signal received through the multimedia signal input interface 31 is an abnormal multimedia signal, the prompt message of the multimedia signal abnormity contains information that the variation amplitude of the voltage or the frequency of the received multimedia signal is abnormal. For example, a pure white image is displayed on the display screen, together with a prompt text containing information that the voltage or the frequency of the received multimedia signal is abnormal. When an interruption occurs in the multimedia signal received through the multimedia signal input interface 31, the prompt message of the multimedia signal abnormity contains information that the interruption occurs in the multimedia signal. For example, the pure white image is displayed on the display screen, together with a prompt text containing information that the interruption occurs in the multimedia signal. When types of multimedia signal abnormities are different, different prompt messages of the multimedia signal abnormities may be output, such that the user can quickly determine the types of the multimedia signal abnormities according to the prompt messages, and take a corresponding action to deal with the case. For example, when the prompt text is displayed and the prompt text contains information that the voltage or frequency of the received multimedia signal is abnormal, whether the external device can input a multimedia signal normally may be checked, and whether a coupling between the multimedia signal input interface and the plug of the data line is normal may also be checked. When the prompt text is displayed and the prompt text contains information that the interruption occurs in the multimedia signal, whether the coupling between the multimedia signal input interface and the plug of the data line is normal may be first checked.

In the embodiment, when the multimedia signal processor 32 determines that the received multimedia signal is abnormal, the multimedia signal processor 32 outputs the preset image signal containing the prompt message of the multimedia signal abnormity to the CPU 33, such that the preset image signal is output to the display screen 34 through the CPU 33, thus not only blurred screens or bright lines displayed on the display screen 34 can be avoided, but also the user is reminded that the received multimedia signal is abnormal.

Furthermore, the multimedia signal processor 32 is further configured to determine whether duration of that the multimedia signal received through the multimedia signal input interface 31 is abnormal reaches a preset time value, and to determine that the multimedia signal input interface 31 is disconnected from the external device and transmit an instruction to the CPU 33 when the duration of that the multimedia signal received through the multimedia signal input interface 31 is abnormal reaches the preset time value, such that a signal for turning off the display screen is generated by the CPU 33 in response to the instruction. The instruction contains information that the display screen needs to be turned off as the multimedia signal input interface 31 is disconnected from the external device.

After pulling the plug of the data line out, the display apparatus 300 cannot receive a multimedia signal from the external device. When the display apparatus 300 fails to receive a multimedia signal from the external device for some time, it is determined that the multimedia signal received through the multimedia signal input interface 31 becomes abnormal for some time.

The above disclosures illustrate preferable embodiments of the present disclosure. It should be pointed out that a person of ordinary skill in the art can make several changes and polish without departing from the principle of the present disclosure, and these changes and polish shall be deemed as the scope of protection of the present disclosure.

## Claims

1. A method for processing multimedia signal abnormity, the method being applied to a display apparatus, the display apparatus comprising a multiple signal input interface capable of being coupled with an external device and receiving a multimedia signal from the external device, the method comprising:
determining whether a multimedia signal received through the multimedia signal input interface is abnormal; and
outputting a preset image signal to a central processing unit (CPU) of the display apparatus based on a determination that the multimedia signal received through the multimedia signal input interface is abnormal, such that the preset image signal is output to a display screen through the CPU, the preset image signal containing a prompt message of a multimedia signal abnormity.

2. The method for processing multimedia signal abnormity of claim 1, wherein the received multimedia signal is determined to be an abnormal multimedia signal when a variation amplitude of a voltage of the received multimedia signal fails to fall within a preset voltage variation amplitude range.

3. The method for processing multimedia signal abnormity of claim 1, wherein the received multimedia signal is determined to be an abnormal multimedia signal when a variation amplitude of a frequency of the received multimedia signal fails to fall within a preset frequency variation amplitude range.

4. The method for processing multimedia signal abnormity of claim 2 or claim 3, wherein the prompt message of the multimedia signal abnormity contains information that the voltage or the frequency of the received multimedia signal is abnormal.

5. The method for processing multimedia signal abnormity of claim 1, wherein the multimedia signal received through the multimedia signal input interface is determined to be abnormal when an interruption occurs in the multimedia signal received through the multimedia signal input interface.

6. The method for processing multimedia signal abnormity of claim 5, wherein the prompt message of the multimedia signal abnormity contains information that the interruption occurs in the multimedia signal.

7. The method for processing multimedia signal abnormity of claim 1, further comprising the following after outputting the preset image signal to the CPU:
determining whether duration of that the multimedia signal received through the multimedia signal input interface is abnormal reaches a preset time value; and
determining that the multimedia signal input interface is disconnected from the external device and transmitting an instruction to the CPU, based on a determination that the duration of that the multimedia signal received through the multimedia signal input interface is abnormal reaches the preset time value, such that a signal for turning off the display screen is generated by the CPU in response to the instruction, the instruction containing information that the display screen needs to be turned off as the multimedia signal input interface is disconnected from the external device.

8. A display apparatus, comprising:
a multimedia signal input interface;
a central processing unit (CPU);
a display screen; and
a multimedia signal processor coupled between the multimedia signal input interface and the CPU, and configured to:
determine whether a multimedia signal received through the multimedia signal input interface is abnormal; and
output a preset image signal to the CPU based on a determination that the multimedia signal received through the multimedia signal input interface is abnormal, such that the preset image signal is output to the display screen through the CPU, the preset image signal containing a prompt message of a multimedia signal abnormity.

9. The display apparatus of claim 8, wherein the multimedia signal processor is configured to determine that the received multimedia signal is an abnormal multimedia signal when a variation amplitude of a voltage of the received multimedia signal is determined to fail to fall within a preset voltage variation amplitude range.

10. The display apparatus of claim 8, wherein the multimedia signal processor is configured to determine that the received multimedia signal is an abnormal multimedia signal when a variation amplitude of a frequency of the received multimedia signal is determined to fail to fall within a preset frequency variation amplitude range.

11. The display apparatus of claim 9 or claim 10, wherein the prompt message of the multimedia signal abnormity contains information that the voltage or the frequency of the received multimedia signal is abnormal.

12. The display apparatus of claim 8, wherein the multimedia signal processor is configured to determine that the multimedia signal received through the multimedia signal input interface is abnormal when an interruption is determined to occur in the multimedia signal received through the multimedia signal input interface.

13. The display apparatus of claim 12, wherein the prompt message of the multimedia signal abnormity contains information that the interruption occurs in the multimedia signal.

14. The display apparatus of claim 8, wherein the multimedia signal processor is further configured to:
determine whether duration of that the multimedia signal received through the multimedia signal input interface is abnormal reaches a preset time value; and
determine that the multimedia signal input interface is disconnected from the external device and transmit an instruction to the CPU, based on a determination that the duration of that the multimedia signal received through the multimedia signal input interface is abnormal reaches the preset time value, such that a signal for turning off the display screen is generated by the CPU in response to the instruction, the instruction containing information that the display screen needs to be turned off as the multimedia signal input interface is disconnected from the external device.
